# EUROPÄISCHE PATENTSCHRIFT

(11) **EP 3 292 535 B1**
(45) Veröffentlichungstag und Bekanntmachung des Hinweises auf die Patenterteilung: **06.02.2019**
(21) Anmeldenummer: 16713351.1
(22) Anmeldetag: 21.03.2016
(51) Int. Cl.: G06T 3/40

(54) **VERFAHREN ZUM ERZEUGEN EINES GESAMTBILDES EINER FAHRZEUGUMGEBUNG EINES FAHRZEUGES UND ENTSPRECHENDE VORRICHTUNG**
METHOD FOR PRODUCING AN OVERALL IMAGE OF A VEHICLE ENVIRONMENT OF A VEHICLE AND CORRESPONDING DEVICE
PROCÉDÉ DE PRODUCTION D'UNE IMAGE COMPLÈTE D'UN ENVIRONNEMENT D'UN VÉHICULE ET D'UN DISPOSITIF CORRESPONDANT

(30) Priorität: 06.05.2015 DE 102015208343
(43) Veröffentlichungstag der Anmeldung: 14.03.2018
(73) Patentinhaber: Robert Bosch GmbH, 70442 Stuttgart (DE)
(72) Erfinder: MAYERLE, Matthias, 70197 Stuttgart (DE); LIEPELT, David, 70376 Stuttgart (DE); ESPARZA GARCÍA, José Domingo, 70178 Stuttgart (DE); CANO, Raphael, 70180 Stuttgart (DE)
(86) Internationale Anmeldenummer: PCT/EP2016/056130
(87) Internationale Veröffentlichungsnummer: WO 2016/177506

(56) Entgegenhaltungen:
- EP-A1- 2 233 359
- US-A1- 2012 314 072

## Beschreibung

Die vorliegende Erfindung betrifft ein Verfahren und eine entsprechende Vorrichtung zum automatischen Erzeugen eines Gesamtbildes einer Fahrzeugumgebung eines Fahrzeuges mittels mehrerer Bilder. Die mehreren Bilder werden jeweils von einer Kamera von mehreren an dem Fahrzeug angebrachten Kameras aktuell aufgenommen.

### Stand der Technik

Aus dem Stand der Technik sind Rundumsicht-Systeme für Fahrzeuge bekannt, die jeweils eine Erzeugung eines zwei- oder dreidimensionalen Gesamtbildes einer Fahrzeugumgebung eines entsprechenden Fahrzeuges ermöglichen.

Ein genanntes Rundumsicht-System umfasst vier an einem Fahrzeug anbringbare Kameras. Wenn die vier Kameras des Rundumsicht-Systems an dem Fahrzeug angebracht sind, wird ein entsprechendes Gesamtbild einer Fahrzeugumgebung des Fahrzeuges mittels mehrerer Bilder erzeugt, die jeweils von einer Kamera der vier Kameras aktuell aufgenommen werden. Dabei stellt ein solches Gesamtbild die entsprechende Fahrzeugumgebung und ein virtuelles Modell des entsprechenden Fahrzeuges aus einer virtuellen Perspektive dar.

Ein genanntes Rundumsicht-System ermöglicht durch die Verwendung eines bildbasierten Rendering-Verfahrens eine freie Navigation einer virtuellen Kamera zur Erzeugung einer zuvor genannten virtuellen Perspektive um ein virtuelles Modell eines entsprechenden Fahrzeuges.

Aus dem Dokument DE 10 2013 220 669 A1 ist ein Verfahren zum Anzeigen eines erfassten Bildes auf einer Anzeigevorrichtung bekannt. Eine Szene wird durch wenigstens eine bilderkennungsbasierte Abbildungsvorrichtung erfasst. Mittels eines Prozessors wird unter Verwendung eines Kameramodells ein virtuelles Bild der erfassten Szene erzeugt. Mittels des Prozessors wird auf das erfasste Bild eine Ansichtssynthesetechnik angewendet, um ein verzeichnungskorrigiertes virtuelles Bild zu erzeugen. Das verzeichnungskorrigierte Bild wird auf einer Rückspiegel-Anzeigevorrichtung angezeigt.

Aus dem Dokument DE 102 56 612 B3 sind ein Verfahren und eine Vorrichtung zum Fahrertraining mit einem Kraftfahrzeug bekannt. Dabei werden dem Fahrer während einer Übungsfahrt durch ein Gelände auf einer Projektionsfläche virtuelle dreidimensionale Gefahrenszenarien aus einem Speichermedium mittels eines Projektionssystems fahrtbegleitend eingeblendet.

Aus dem Dokument EP 2 233 359 A1 ist eine Umfeldüberwachungsvorrichtung für ein Fahrzeug bekannt, die ein Paar Seitenkameras umfasst, die jeweils in einem Seitenspiegel des Fahrzeugs angeordnet sind. Die Seitenkameras sind dazu ausgebildet, Bilder aufzunehmen, die jeweils Ansichten abbilden, die sich gegenüber dem Fahrzeug nach links und rechts erstrecken und sich unter den Seitenspiegeln erstreckende Ansichtsbereiche umfassen. Die Vorrichtung umfasst eine erste Einheit, die dazu ausgebildet ist, eine graphische Darstellung des Fahrzeuges aus einer derartigen Perspektive zu erzeugen, dass die graphische Darstellung des Fahrzeuges zumindest einen Teil des Fahrzeugs und die Seitenspiegel darstellt. Die Vorrichtung umfasst ferner eine zweite Einheit, die dazu ausgebildet ist, links- und rechtsseitige Darstellungen basierend auf den ausgenommenen Bildern derartig zu erzeugen, dass die links- und rechtsseitigen Darstellungen jeweils links- und rechtsseitigen Abschnitten der auf einem Bildschirm angezeigten graphischen Darstellung des Fahrzeuges entsprechen.

### Offenbarung der Erfindung

Erfindungsgemäß wird ein Verfahren zum automatischen Erzeugen eines Gesamtbildes einer Fahrzeugumgebung eines Fahrzeuges mittels einer Vorrichtung und mehrerer Bilder offenbart. Die mehreren Bilder werden jeweils von einer Kamera von mehreren an dem Fahrzeug angebrachten Kameras aktuell aufgenommen. Dabei stellt das Gesamtbild die Fahrzeugumgebung und ein virtuelles Modell des Fahrzeuges aus einer virtuellen Perspektive dar. Das erfindungsgemäße Verfahren umfasst einen ersten Schritt eines Bestimmens einer Position eines jeden in einem Bild der mehreren Bilder vorkommenden vordefinierten Bildabschnittes, der eine Fahrzeugkarosserie und/oder ein Fahrzeugrad zumindest teilweise abbildet. Ferner umfasst das erfindungsgemäße Verfahren einen zweiten Schritt eines Abdeckens eines Teiles jedes Bildes der mehreren Bilder, in dem ein vordefinierter Bildabschnitt vorkommt, mit einer dem entsprechenden Bild zugeordneten Bildmaske. Auch umfasst das erfindungsgemäße Verfahren einen dritten Schritt eines Bestimmens jeder Bildmaske anhand der bestimmten Position jedes sich in dem zugeordneten Bild befindlichen vordefinierten Bildabschnittes. Bei dem dritten Schritt wird jede Bildmaske derartig bestimmt, dass diese jeden in dem zugeordneten Bild vorkommenden vordefinierten Bildabschnitt abdeckt. Auch umfasst das erfindungsgemäße Verfahren einen vierten Schritt eines Erzeugens des Gesamtbildes durch Zusammensetzen der mehreren Bilder nach ihrer Abdeckung mit den zugeordneten Bildmasken. Das Verfahren umfasst ferner einen fünften Schritt und einen sechsten Schritt. Der fünfte Schritt umfasst ein Bestimmen einer aktuellen Position wenigstens eines Fahrzeugrades in Abhängigkeit von einem aktuellen Lenkwinkel des Fahrzeuges. Der sechste Schritt umfasst ein Durchführen des Bestimmens der Position wenigstens eines in einem Bild der mehreren Bilder vorkommenden vordefinierten Bildabschnittes, der das wenigstens eine Fahrzeugrad zumindest teilweise abbildet, anhand der aktuellen Position des wenigstens eines Fahrzeugrades. Bei dem sechsten Schritt wird das Bestimmen der Position des entsprechenden wenigstens einen vordefinierten Bildabschnittes auch anhand von aktuellen intrinsischen und extrinsischen Kalibrierungsparametern einer Kamera der mehreren Kameras durchgeführt, mittels der das entsprechende Bild aktuell aufgenommen wurde.

Die Unteransprüche zeigen bevorzugte Weiterbildungen der Erfindung.

Bei dem zuvor beschriebenen Verfahren umfasst der vierte Schritt bevorzugt ein Anzeigen des Gesamtbildes auf einer Anzeigeeinheit.

In einem Fall, in dem ein vordefinierter Bildabschnitt eines Bildes der mehreren Bilder ein Fahrzeugrad zumindest teilweise abbildet, ändert sich eine Position eines solchen vordefinierten Bildabschnittes in einem entsprechenden Bild, wenn sich eine Position des entsprechenden Fahrzeugrades ändert. Dies geschieht auch dann, wenn sich eine Kamera der vier Kameras, mittels der ein entsprechendes Bild aufgenommen wurde, in einer vordefinierten Position befindet. Folglich kann zum Abdecken eines vordefinierten Bildabschnittes, der ein Fahrzeugrad zumindest teilweise abbildet, eine Bildmaske verwendet werden, die in Abhängigkeit von einer aktuellen Position des entsprechenden vordefinierten Bildabschnittes in dem entsprechenden Bild eingestellt werden kann und deswegen auch als dynamische Bildmaske bezeichnet wird.

Ein Abdecken jedes vordefinierten Bildabschnittes, der ein Fahrzeugrad zumindest teilweise abbildet, mittels einer dynamischen Bildmaske führt dazu, dass in dem entsprechenden Bild nur eine minimale Fläche abgedeckt wird. Dadurch wird ein Informationsverlust, der durch ein Abdecken einer größeren Fläche des entsprechenden Bildes entstehen würde, vermieden. Auf diese Weise kann durch ein entsprechendes Gesamtbild eine maximal mögliche Informationsmenge über die Fahrzeugumgebung bereitgestellt werden.

Bei einem zuvor beschriebenen Verfahren wird bevorzugt ein siebter Schritt durchgeführt. Der siebte Schritt umfasst ein Positionieren des virtuellen Modells des Fahrzeuges in einem Bildbereich des Gesamtbildes, dessen Position in dem Gesamtbild einer Position des Fahrzeuges in der Fahrzeugumgebung entspricht.

Bei einem zuvor beschriebenen Verfahren wird bevorzugt ein achter Schritt durchgeführt. Der achte Schritt umfasst ein Durchführen des Bestimmens der Position wenigstens eines in einem Bild der mehreren Bilder vorkommenden vordefinierten Bildabschnittes, der die Fahrzeugkarosserie zumindest teilweise abbildet, anhand von aktuellen intrinsischen und extrinsischen Kalibrierungsparametern einer Kamera der mehreren Kameras, mittels der das entsprechende Bild aktuell aufgenommen wurde.

In einem Fall, in dem ein vordefinierter Bildabschnitt eines Bildes der mehreren Bilder die Fahrzeugkarosserie zumindest teilweise abbildet, weist der entsprechende vordefinierte Bildabschnitt immer eine und dieselbe Position in dem entsprechenden Bild auf, wenn sich die entsprechende Kamera in einer vordefinierten Position befindet. Folglich kann zum Abdecken eines vordefinierten Bildabschnittes, der die Fahrzeugkarosserie zumindest teilweise abbildet, eine Bildmaske für eine vordefinierte Position der entsprechenden Kamera verwendet werden, die für die vordefinierte Position der entsprechenden Kamera nur einmalig bestimmt werden kann und deswegen auch als statische Bildmaske bezeichnet wird.

Ein Abdecken jedes vordefinierten Bildabschnittes, der die Fahrzeugkarosserie zumindest teilweise abbildet, mittels einer Bildmaske, führt dazu, dass in einem entsprechenden Gesamtbild die Fahrzeugkaroserie nicht abgebildet wird. Vorteilhaft dabei ist, dass in einem solchen Gesamtbild das virtuelle Modell des Fahrzeuges deutlich zu erkennen ist, da dieses nicht mit einer Abbildung der Fahrzeugkarosserie überlagert wird. Dies führt zu einer verbesserten Visualisierung der Fahrzeugumgebung.

Es kann vorgesehen sein, dass ein Bild der mehreren Bilder, in dem ein vordefinierter Bildabschnitt vorkommen kann, der ein Fahrzeugrad zumindest teilweise abbildet, mittels einer Bildmaske überlagert wird, die derartig bestimmt wird, dass diese alle mögliche Positionen abdeckt, die während einer Bewegung des entsprechenden Fahrzeugrades von seinen Abbildungen angenommen werden können.

Ein Abdecken jedes vordefinierten Bildabschnittes, der ein Fahrzeugrad zumindest teilweise abbildet, mittels einer Bildmaske führt dazu, dass in einem entsprechenden Gesamtbild keine unerwünschten Projektionen der Fahrzeugräder erscheinen. Eine solche unerwünschte Projektion kann in einem Bildbereich des entsprechenden Gesamtbildes erscheinen, in dem ein Boden, auf dem sich das Fahrzeug befindet, abgebildet wird. Vorteilhaft dabei ist, dass in einem solchen Gesamtbild die Fahrzeugumgebung deutlich zu erkennen ist, da ihre Abbildung nicht mit den genannten Projektionen überlagert wird. Dies führt zu einer verbesserten Visualisierung der Fahrzeugumgebung.

Bei einem zuvor beschriebenen Verfahren werden bevorzugt ein neunter Schritt und ein zehnter Schritt durchgeführt. Der neunte Schritt umfasst ein Erstellen oder ein Verwenden einer Lookup-Tabelle, die eine Position wenigstens eines vordefinierten Bildabschnittes umfasst, der jeweils in der entsprechenden Position in einem Bild wenigstens einer Kamera der mehreren Kameras vorkommen kann, wenn sich die wenigstens eine Kamera in einer vordefinierten Position befindet. Der zehnte Schritt umfasst ein Entnehmen der Position des wenigstens einen vordefinierten Bildabschnittes aus der Lookup-Tabelle, wenn der wenigstens eine vordefinierte Bildabschnitt in dem aktuellen Bild der wenigstens einen Kamera vorkommt. Auf diese Weise kann ein Bestimmen einer Bildmaske, die einen vordefinierten Bildabschnitt abdecken soll, dessen Position in dem entsprechenden Bild aus der Lookup-Tabelle entnommen wird, schneller erfolgen. Der Grund dafür ist, dass die Position eines solchen vordefinierten Bildabschnittes nicht erst anhand von aktuellen intrinsischen und extrinsischen Kalibrierungsparametern der entsprechenden Kamera bestimmt werden muss.

Bei einem zuvor beschriebenen Verfahren wird bevorzugt ein elfter Schritt durchgeführt. Der elfte Schritt umfasst ein Ersetzen wenigstens eines Bildabschnittes des Gesamtbildes, der wenigstens einem vordefinierten Bildabschnitt eines Bildes der mehreren Bilder entspricht, durch wenigstens eine vordefinierte Bildstruktur in dem Gesamtbild.

Ein weiterer Aspekt der Erfindung betrifft eine Vorrichtung zum Erzeugen eines Gesamtbildes einer Fahrzeugumgebung eines Fahrzeuges mittels mehrerer Bilder. Dabei werden die mehreren Bilder jeweils von einer Kamera von mehreren an dem Fahrzeug angebrachten Kameras aktuell aufgenommen. Das von der Vorrichtung zu erzeugende Gesamtbild stellt die Fahrzeugumgebung und ein virtuelles Modell des Fahrzeuges aus einer virtuellen Perspektive dar. Vorzugsweise umfasst die Vorrichtung eine Anzeigeeinheit.

Eine zuvor beschriebene Vorrichtung ist dazu ausgebildet, ein zuvor beschriebenes Verfahren durchzuführen.

Ein anderer Aspekt betrifft ein Rundumsichtsystem mit einer zuvor beschriebenen Vorrichtung und vier an einem Fahrzeug anbringbaren Kameras.

### Kurze Beschreibung der Zeichnungen

Nachfolgend werden Ausführungsbeispiele der Erfindung unter Bezugnahme auf die begleitende Zeichnungen im Detail beschrieben. Für gleiche Komponenten werden jeweils gleiche Bezugszeichen verwendet. Jede Komponente wird jeweils einmalig eingeführt und bei Wiederholung jeweils als schon bekannt behandelt, unabhängig davon, auf welche Zeichnung oder auf welches Ausführungsbeispiel sich ein jeweils entsprechender Beschreibungsteil, in dem die entsprechende Komponente wiederholt vorkommt, bezieht. In den Zeichnungen ist:
- Figur 1: ein Bild einer ersten Kamera von vier an einem Fahrzeug angebrachten Kameras eines Rundumsichtsystems und eine statische Bildmaske, die zum Abdecken eines Teiles des ersten Bildes verwendbar ist,
- Figur 2: ein gemäß einer ersten Ausführungsform der Erfindung erzeugtes erstes Gesamtbild einer Fahrzeugumgebung des Fahrzeuges, und
- Figur 3: ein gemäß der ersten Ausführungsform der Erfindung erzeugtes zweites Gesamtbild der Fahrzeugumgebung des Fahrzeuges.

### Ausführungsformen der Erfindung

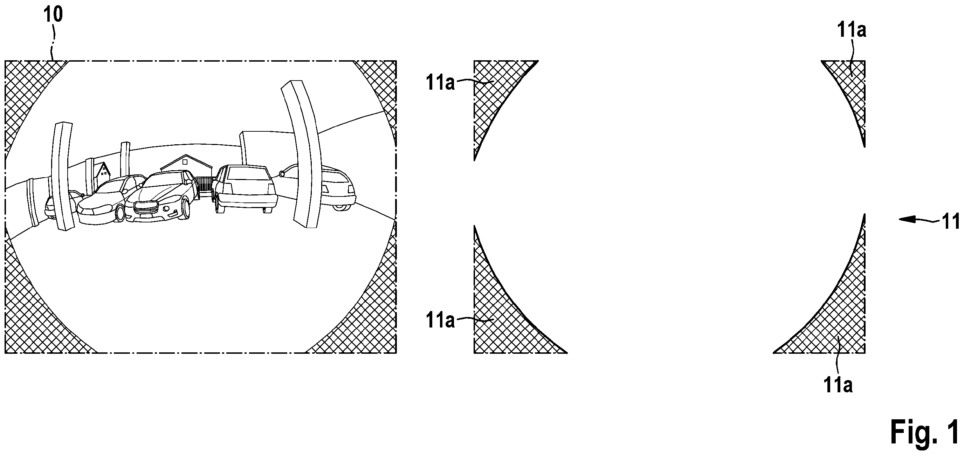

Figur 1 zeigt ein Bild 10 einer ersten Kamera von vier an einem Fahrzeug angebrachten Kameras eines Rundumsichtsystems für das Fahrzeug, wobei auf einer jeden Seite des Fahrzeuges jeweils eine Kamera angebracht ist.

Figur 1 zeigt ferner eine Bildmaske 11, die zum Abdecken eines Teiles des Bildes 10 der ersten Kamera verwendbar ist. Aus der Figur 1 ist leicht ersichtlich, dass nach einer Überlagerung des Bildes 10 der ersten Kamera mit der Bildmaske 11 das Bild 10 der ersten Kamera nur teilweise durch die Bildmaske 11 abgedeckt wird, nämlich in den Bereichen 11a. Die Bildmaske 11 ist eine statische Bildmaske, die für eine vordefinierte Position der ersten Kamera einmalig in Abhängigkeit von den aktuellen intrinsischen und extrinsischen Kalibrierungsparametern der ersten Kamera bestimmt wird. Folglich weist die Bildmaske 11 für die vordefinierte Position der ersten Kamera eine feste Ausgestaltung auf.

Gemäß einer ersten Ausführungsform der Erfindung umfasst ein erstes Rundumsichtsystem für das Fahrzeug eine erste Vorrichtung zum Erzeugen wenigstens eines Gesamtbildes der Fahrzeugumgebung des Fahrzeuges und vier an dem Fahrzeug angebrachten Kameras. Dabei ist in einem Frontbereich und in einem Heckbereich des Fahrzeuges jeweils eine Kamera der vier Kameras angebracht. Ferner ist an einer jeden Seite des Fahrzeuges jeweils eine Kamera der vier Kameras angebracht.

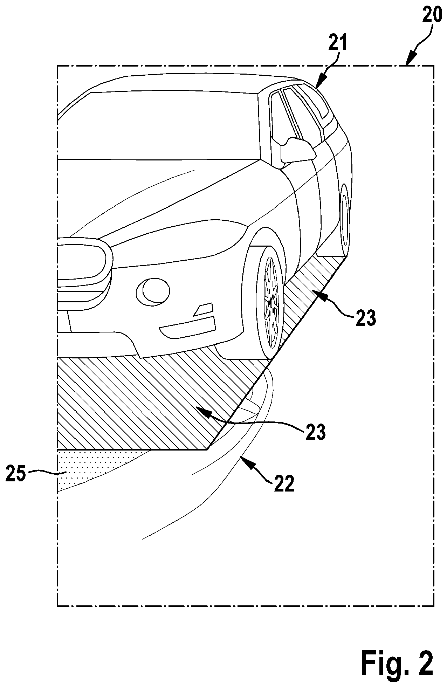

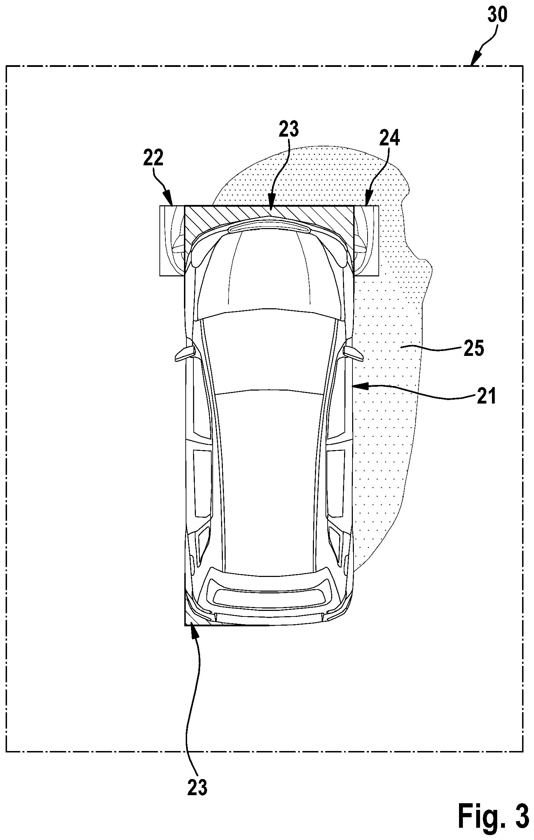

Die Funktionsweise der ersten Vorrichtung wird in Zusammenhang mit den Figuren 2 und 3 beschrieben.

Die erste Vorrichtung ist dazu ausgebildet, eine Position eines jeden ersten vordefinierten Bildabschnittes zu bestimmen, der eine Fahrzeugkarosserie zumindest teilweise abbildet und in einem Bild von vier Bildern vorkommt, die mittels der vier Kameras aktuell aufgenommen wurden. Hier erfolgt eine Bestimmung der Position jedes in einem Bild der vier Bilder vorkommenden ersten vordefinierten Bildabschnittes in Abhängigkeit von den aktuellen intrinsischen und extrinsischen Kalibrierungsparametern der Kamera, mittels der das entsprechende Bild aktuell aufgenommen wurde.

Die erste Vorrichtung ist ferner dazu ausgebildet, einen Teil jedes Bildes der vier Bilder, in dem ein erster vordefinierter Bildabschnitt vorkommt, mit einer dem entsprechenden Bild zugeordneten ersten Bildmaske, hier einer Schraffur 23, abzudecken. Weiterhin bestimmt die erste Vorrichtung jede erste Bildmaske in Abhängigkeit von der bestimmten Position jedes sich in dem zugeordneten Bild befindlichen ersten vordefinierten Bildabschnittes derartig, dass diese jeden in dem zugeordneten Bild vorkommenden ersten vordefinierten Bildabschnitt abdeckt. Für eine vordefinierte Position einer Kamera der vier Kameras weist eine für das aktuell aufgenommene Bild der entsprechenden Kamera verwendbare erste Bildmaske eine und dieselbe Ausgestaltung auf und wird einmalig bestimmt. Eine solche erste Bildmaske ist folglich eine statische Bildmaske.

Die erste Vorrichtung ist auch dazu ausgebildet, ein erstes Gesamtbild 20 und ein zweites Gesamtbild 30, der Fahrzeugumgebung des Fahrzeuges durch Zusammensetzen der vier Bilder nach ihrer Abdeckung mit den ersten Bildmasken zu erzeugen. Die erste Vorrichtung ist weiterhin dazu ausgebildet, jeweils ein virtuelles Modell 21 des Fahrzeuges in einem Bildbereich des ersten Gesamtbildes 20 und des zweiten Gesamtbildes 30 zu positionieren, dessen Position und Ansicht in dem ersten Gesamtbild 20 und dem zweiten Gesamtbild 30 einer Position und Ansicht des Fahrzeuges in der Fahrzeugumgebung entspricht.

Gemäß der ersten Ausführungsform der Erfindung wird ein jeder in einem Bild der vier Bilder vorkommender zweiter vordefinierter Bildabschnitt, der ein Fahrzeugrad zumindest teilweise abbildet, nicht mittels einer entsprechenden ersten Bildmaske abgedeckt.

Aus dem ersten Gesamtbild 20 sowie aus dem zweiten Gesamtbild 30 ist ersichtlich, dass ein Bild, das mittels der sich auf einer Fahrerseite des Fahrzeuges befindlichen Kamera aktuell aufgenommen wurde, eine Abbildung eines ersten Fahrzeugrades umfasst, das sich auf der Fahrerseite in dem Frontbereich des Fahrzeuges befindet. Dies kann anhand einer Projektion 22 des ersten Fahrzeugrades erkannt werden, die in einem Bildbereich des ersten Gesamtbildes 20 und des zweiten Gesamtbildes 30 jeweils erscheint, der einen Boden abbildet, auf dem sich das Fahrzeug befindet. Ferner ist aus dem zweiten Gesamtbild 30 ersichtlich, dass ein Bild, das mittels der sich auf einer Beifahrerseite des Fahrzeuges befindlichen Kamera aktuell aufgenommen wurde, eine Abbildung eines zweiten Fahrzeugrades umfasst, das sich auf der Beifahrerseite in dem Frontbereich des Fahrzeuges befindet. Dies kann anhand einer Projektion 24 des zweiten Fahrzeugrades erkannt werden, die auch in einem Bildbereich des zweiten Gesamtbildes 30 erscheint, der einen Boden abbildet, auf dem sich das Fahrzeug befindet. Das in der Figur 2 dargestellte erste Gesamtbild 20 zeigt die Fahrzeugumgebung und das für das Fahrzeug verwendete virtuelle Modell 21 aus einer ersten virtuellen Perspektive. Das in der Figur 3 dargestellte zweite Gesamtbild 30 zeigt die Fahrzeugumgebung und das für das Fahrzeug verwendete virtuelle Modell 21 aus einer zweiten virtuellen Perspektive.

Ferner ist in dem ersten Gesamtbild 20 sowie in dem dem zweiten Gesamtbild 30 ein Bereich 25 dargestellt, der den eigenen Schatten des Fahrzeuges abbildet.

Gemäß einer zweiten Ausführungsform der Erfindung umfasst ein zweites Rundumsichtsystem für das Fahrzeug eine zweite Vorrichtung zum Erzeugen wenigstens eines Gesamtbildes einer Fahrzeugumgebung des Fahrzeuges und vier an dem Fahrzeug angebrachten Kameras. Dabei sind die vier Kameras des zweiten Rundumsichtsystems in gleicher Weise an dem Fahrzeug angebracht, wie die vier Kameras des ersten Rundumsichtsystems.

Die Funktionsweise der zweiten Vorrichtung ist hinsichtlich der Verwendung der ersten Bildmasken identisch zu der ersten Vorrichtung.

Zusätzlich ist die zweite Vorrichtung dazu ausgebildet, eine Position eines jeden zweiten vordefinierten Bildabschnittes zu bestimmen, der ein Fahrzeugrad zumindest teilweise abbildet und in einem Bild von vier Bildern vorkommt, die von den vier Kameras aktuell aufgenommen wurden. Hier erfolgt eine Bestimmung der Position jedes in einem Bild der vier Bilder vorkommenden zweiten vordefinierten Bildabschnittes in Abhängigkeit von den aktuellen intrinsischen und extrinsischen Kalibrierungsparametern der Kamera, mittels der das entsprechende Bild aktuell aufgenommen wurde. Ferner erfolgt hier die Bestimmung der Position jedes in einem Bild der vier Bilder vorkommenden zweiten vordefinierten Bildabschnittes auch in Abhängigkeit von einer aktuellen Position des Fahrzeugrades, das in dem entsprechenden zweiten vordefinierten Bildabschnitt zumindest teilweise abgebildet wird.

Die zweite Vorrichtung ist ferner dazu ausgebildet, einen Teil jedes Bildes der vier Bilder, in dem ein zweiter vordefinierten Bildabschnitt vorkommt, mit einer dem entsprechenden Bild zugeordneten zweiten Bildmaske abzudecken. Weiterhin bestimmt die zweite Vorrichtung jede zweite Bildmaske in Abhängigkeit von der bestimmten Position jedes sich in dem zugeordneten Bild befindlichen zweiten vordefinierten Bildabschnittes derartig, dass diese jeden in dem zugeordneten Bild vorkommenden zweiten vordefinierten Bildabschnitt abdeckt. Dabei weist eine für ein Bild der vier Bilder verwendbare zweite Bildmaske für unterschiedliche Positionen eines in dem entsprechenden Bild abbildbaren Fahrzeugrads auch unterschiedliche Ausgestaltungen auf. Dies geschieht auch dann, wenn sich die Kamera, mittels der das entsprechende Bild aktuell aufgenommen wurde, in einer vordefinierten Position befindet. Eine solche zweite Bildmaske ist eine dynamische Bildmaske, die für unterschiedliche Positionen des entsprechenden Fahrzeugrades unterschiedlich eingestellt werden kann.

Die zweite Vorrichtung ist ferner dazu ausgebildet, das wenigstens eine Gesamtbild der Fahrzeugumgebung des Fahrzeuges durch Zusammensetzen der vier aktuell aufgenommenen Bilder nach ihrer Abdeckung mit den ersten und zweiten Bildmasken zu erzeugen. Die zweite Vorrichtung ist weiterhin dazu ausgebildet, ein virtuelles Modell des Fahrzeuges in einem Bildbereich des wenigstens einen Gesamtbildes zu positionieren, dessen Position und Ansicht in dem wenigstens einen Gesamtbild einer Position und Ansicht des Fahrzeuges in der Fahrzeugumgebung entspricht.

Die durch die zweite Vorrichtung erzeugten Gesamtbilder entsprechen folglich dem ersten Gesamtbild 20 und dem zweiten Gesamtbild 30, wobei die Projektionen 22 des ersten Fahrzeugrades und die Projektion 24 des zweiten Fahrzeugrades nicht vorhanden sind und zum Beispiel durch Schraffuren oder Texturen der benachbarten Bildbereiche ersetzt sind.

Neben der voranstehenden schriftlichen Offenbarung wird hiermit zur weiteren Offenbarung der Erfindung ergänzend auf die Darstellung in den Figuren 1 bis 3 Bezug genommen.

## Patentansprüche

1. Verfahren zum automatischen Erzeugen eines Gesamtbildes (20; 30) einer Fahrzeugumgebung eines Fahrzeuges mittels einer Vorrichtung und mehrerer Bilder, die jeweils von einer Kamera von mehreren an dem Fahrzeug angebrachten Kameras aktuell aufgenommen werden, wobei das Gesamtbild (20; 30) die Fahrzeugumgebung und ein virtuelles Modell (21) des Fahrzeuges aus einer virtuellen Perspektive darstellt,
wobei das Verfahren die Schritte umfasst:
Bestimmen einer Position eines jeden in einem Bild der mehreren Bilder vorkommenden vordefinierten Bildabschnittes (22, 23, 24),
Abdecken eines Teils jedes Bildes der mehreren Bilder, in dem ein vordefinierter Bildabschnitt (22, 23, 24) vorkommt, mit einer dem entsprechenden Bild zugeordneten Bildmaske,
Bestimmen jeder Bildmaske anhand der bestimmten Position jedes sich in dem zugeordneten Bild befindlichen vordefinierten Bildabschnittes (22, 23, 24) derartig, dass diese jeden in dem zugeordneten Bild vorkommenden vordefinierten Bildabschnitt (22, 23, 24) abdeckt, und
Erzeugen des Gesamtbildes (20; 30) durch Zusammensetzen der mehreren Bilder nach ihrer Abdeckung mit den zugeordneten Bildmasken,
**dadurch gekennzeichnet, dass**
jeder in einem in einem Bild der mehreren Bilder vorkommenden vordefinierte Bildabschnitt eine Fahrzeugkarosserie und/oder ein Fahrzeugrad zumindest teilweise abbildet, wobei das Verfahren ferner die folgenden Schritte umfasst:
Bestimmen einer aktuellen Position wenigstens eines Fahrzeugrades in Abhängigkeit von einem aktuellen Lenkwinkel des Fahrzeuges, und Durchführen des Bestimmens der Position wenigstens eines in einem Bild der mehreren Bilder vorkommenden vordefinierten Bildabschnittes (22, 24), der das wenigstens eine Fahrzeugrad zumindest teilweise abbildet, anhand der aktuellen Position des wenigstens eines Fahrzeugrades und von aktuellen intrinsischen und extrinsischen Kalibrierungsparametern einer Kamera der mehreren Kameras, mittels der das entsprechende Bild aktuell aufgenommen wurde.

2. Verfahren nach dem vorangehenden Anspruch, **gekennzeichnet durch**:
Erstellen oder Verwenden einer Lookup-Tabelle, die eine Position wenigstens eines vordefinierten Bildabschnittes umfasst, der jeweils in der entsprechenden Position in einem Bild wenigstens einer Kamera der mehreren Kameras vorkommen kann, wenn sich die wenigstens eine Kamera in einer vordefinierten Position befindet, und
Entnehmen der Position des wenigstens einen vordefinierten Bildabschnittes aus der Lookup-Tabelle, wenn der wenigstens eine vordefinierte Bildabschnitt in dem aktuellen Bild der wenigstens einen Kamera vorkommt.

3. Verfahren nach einem der vorangehenden Ansprüche, **gekennzeichnet durch**:
Positionieren des virtuellen Modells (21) des Fahrzeuges in einem Bildbereich des Gesamtbildes (20; 30), dessen Position in dem Gesamtbild (20; 30) einer Position des Fahrzeuges in der Fahrzeugumgebung entspricht.

4. Vorrichtung zum Erzeugen eines Gesamtbildes (20; 30) einer Fahrzeugumgebung eines Fahrzeuges mittels mehrerer Bilder, die jeweils von einer Kamera von mehreren an dem Fahrzeug angebrachten Kameras aktuell aufgenommen werden, wobei das Gesamtbild (20; 30) die Fahrzeugumgebung und ein virtuelles Modell (21) des Fahrzeuges aus einer virtuellen Perspektive darstellt, wobei die Vorrichtung dazu ausgebildet ist, ein Verfahren nach einem der Ansprüche 1 bis 3 durchzuführen.

## Claims

1. Method for automatically producing an overall image (20; 30) of a vehicle environment of a vehicle by means of a device and a plurality of images, which are each produced currently by a camera of a plurality of cameras fitted to the vehicle, the overall image (20; 30) representing the vehicle environment and a virtual model (21) of the vehicle from a virtual perspective,
the method comprising the steps:
determining a position of each predefined image section (22, 23, 24) occurring in an image from the plurality of images,
covering a part of each image of the plurality of images in which a predefined image section (22, 23, 24) occurs with an image mask assigned to the current image,
determining each image mask by using the determined position of each predefined image section (22, 23, 24) located in the associated image, in such a way that the said image mask covers each predefined image section (22, 23, 24) occurring in the associated image, and
producing the overall image (20; 30) by assembling the plurality of images following their covering with the associated image masks,
**characterized in that**
each predefined image section occurring in an in an image of the plurality of images at least partly depicts a vehicle body and/or a vehicle wheel, the method further comprising the following steps:
determining a current position of at least one vehicle wheel on the basis of a current steering angle of the vehicle, and
carrying out the determination of the position of at least one predefined image section (22, 24) occurring in an image from the plurality of images which at least partly depicts the at least one vehicle wheel by using the current position of the at least one vehicle wheel and on the basis of current intrinsic and extrinsic calibration parameters of a camera of the plurality of cameras by means of which the corresponding image has currently been recorded.

2. Method according to the preceding claim, **characterized by**:
creating or using a look-up table which comprises a position of at least one predefined image section which in each case can occur in the corresponding position in an image from least one camera of the plurality of cameras when the at least one camera is located in a predefined position, and
removing the position of the at least one predefined image section from the look-up table when the at least one predefined image section occurs in the image from the at least one camera.

3. Method according to one of the preceding claims, **characterized by**:
positioning the virtual model (21) of the vehicle in an image region of the overall image (20; 30), the position of which in the overall image (20; 30) corresponds to a position of the vehicle in the vehicle environment.

4. Device for producing an overall image (20; 30) of a vehicle environment by means of a plurality of images which are each recorded currently by a camera of a plurality of cameras fitted to the vehicle, the overall image (20; 30) representing the vehicle environment and a virtual model (21) of the vehicle from a virtual perspective,
wherein the device is designed to carry out a method according to one of Claims 1 to 3.

## Revendications

1. Procédé de production automatique d'une image complète (20 ; 30) d'un environnement de véhicule d'un véhicule au moyen d'un dispositif et d'une pluralité d'images, qui sont chacune acquises actuellement par une caméra d'une pluralité de caméras montées sur le véhicule, dans lequel l'image complète (20 ; 30) représente l'environnement du véhicule et un modèle virtuel (21) du véhicule à partir d'un point de vue virtuel,
dans lequel le procédé comprend les étapes consistant à :
déterminer une position de chaque partie d'image prédéterminée (22, 23, 24) apparaissant dans une image de la pluralité d'images,
recouvrir une partie de chaque image de la pluralité d'images, dans laquelle une partie d'image prédéfinie (22, 23, 24) apparait, avec un masque d'image associé à l'image correspondante,
déterminer chaque masque d'image sur la base de la position déterminée de chaque partie d'image prédéfinie (22, 23, 24) se trouvant dans l'image associée, de telle sorte que celui-ci recouvre chaque partie d'image prédéfinie (22, 23, 24) apparaissant dans l'image associée ; et
produire l'image complète (20 ; 30) par assemblage de la pluralité d'images après qu'elles ont été recouvertes par les masques d'image associés,
**caractérisé en ce que**
chaque partie d'image prédéfinie apparaissant dans une dans une image de la pluralité d'images reproduit au moins partiellement une carrosserie de véhicule et/ou une roue de véhicule, dans lequel le procédé comprend en outre les étapes consistant à :
déterminer une position actuelle d'au moins une roue de véhicule en fonction d'un angle de braquage actuel du véhicule, et
effectuer la détermination de la position d'au moins une partie d'image prédéfinie (22, 24) apparaissant dans une image de la pluralité d'images, ladite partie d'image prédéfinie reproduisant au moins partiellement ladite au moins une roue de véhicule, sur la base de la position actuelle de ladite au moins une roue de véhicule et de paramètres d'étalonnage intrinsèques et extrinsèques actuels d'une caméra de la pluralité des caméras au moyen de laquelle l'image correspondante a été actuellement acquise.

2. Procédé selon la revendication précédente, **caractérisé par** le fait de :
créer ou d'utiliser une table de consultation comprenant une position d'au moins une partie d'image prédéfinie qui peut respectivement apparaître à la position correspondante dans une image d'au moins une caméra de la pluralité de caméras lorsque ladite au moins une caméra se trouve à une position prédéfinie, et
extraire la position de ladite au moins une partie d'image prédéfinie de la table de consultation lorsque ladite au moins une partie d'image prédéfinie apparaît dans l'image actuelle de ladite au moins une caméra.

3. Procédé selon l'une des revendications précédentes, **caractérisé par** le fait de :
positionner le modèle virtuel (21) du véhicule dans une zone d'image de l'image complète (20 ; 30) dont la position dans l'image complète (20 ; 30) correspond à une position du véhicule dans l'environnement du véhicule.

4. Dispositif de production d'une image complète (20 ; 30) d'un environnement de véhicule d'un véhicule au moyen d'une pluralité d'images dont chacune est actuellement acquise par une caméra d'une pluralité de caméras montées sur le véhicule, dans lequel l'image complète (20 ; 30) représente l'environnement du véhicule et un modèle virtuel (21) du véhicule à partir d'un point de vue virtuel, dans lequel le dispositif est conçu pour mettre en oeuvre un procédé selon l'une des revendications 1 à 3.
